# EUROPEAN PATENT APPLICATION

(11) **EP 1 662 729 A1**
(43) Date of publication of application: **31.05.2006**
(21) Application number: 05026015.7
(22) Date of filing: 29.11.2005
(51) Int. Cl.: H04L 12/56

(54) **Determining cells to be deleted from an active set based on the reception state of an uplink high-speed signal**

(30) Priority: 30.11.2004 JP 2004346031
(71) Applicant: NEC Corporation, Minato-ku Tokyo (JP)
(72) Inventor: Haseba, Yukio, Minato-ku Tokyo 108-8001 (JP); Kondo, Daisuke, Minato-ku Tokyo 108-8001 (JP); Sakuma, Emiko, Minato-ku Tokyo 108-8001 (JP); Nishimura, Osami, Minato-ku Tokyo 108-8001 (JP); Kawabata, Hisashi, Minato-ku Tokyo 108-8001 (JP); Iwasaki, Motoya, Minato-ku Tokyo 108-8001 (JP)
(74) Representative: Glawe, Delfs, Moll

(57) **Abstract**

Each base station (100,101) measures ((1)) the reception states of an uplink high-speed signal from mobile terminals and periodically reports ((2)) the measurement results to a radio network controller (RNC,200). The RNC determines cells that are to be deleted from an active set based on the reception states (for example, the reception SIR) that are reported from each base station. The RNC transmits to one base station and mobile terminal a radio line release request ((4)) for releasing the radio line of the uplink high-speed signal that has been set to a cell that has been determined as a cell to be deleted from the active set. The base station (100) and mobile terminal (1) that have received the radio line release request from the RNC each release the radio line, whereby the cell of the other base station is eliminated from the active set. In alternative embodiments, the base stations determine cells that are to be deleted from the active set and report to the RNC a request, data of only a control signal as the data of the high speed signal, or an out-of-step state for the high speed channel, which is set to cells that have been determined to be deleted.

## Description

### BACKGROUND OF THE INVENTION

### 1. Field of the Invention:

The present invention relates to an active set selection method for uplink high-speed signals of a mobile communication system.

### 2. Description of the Related Art:

In CDMA mobile communication systems that have been attracting attention as mobile communication systems in recent years, mobile terminals are able to set radio lines to a plurality of base stations at the same time. Thus, when a mobile station moves within the communication areas of a plurality of base stations, the mobile terminal, while setting radio lines with a plurality of base stations, performs handover by which the base station to which it is connected is switched, and thus can move without having its line disconnected. When performing this type of handover in a CDMA mobile communication system, cells in which radio lines are set to one mobile terminal are managed as the active set. In other words, the active set signifies a list of cells in which radio lines are set to one mobile terminal. Then, as the mobile terminal moves, the cells that are included in the active set change as cells are added to or deleted from the active set.

If one cell is constituted by one base station, a mobile terminal sets a radio line with a base station and performs handover with the base station. In such a case, the active set is a list of base stations that set radio lines with mobile terminals. However, the use of an antenna having directivity actually allows one base station to constitute a plurality of cells, and handover is therefore performed in cell units. As a result, an active set is a list of cells in which radio lines are set with mobile terminals.

Thus, a cell does not merely indicate a communication area in which communication is possible with a base station, but can be described as the object to which radio lines with mobile terminals are set.

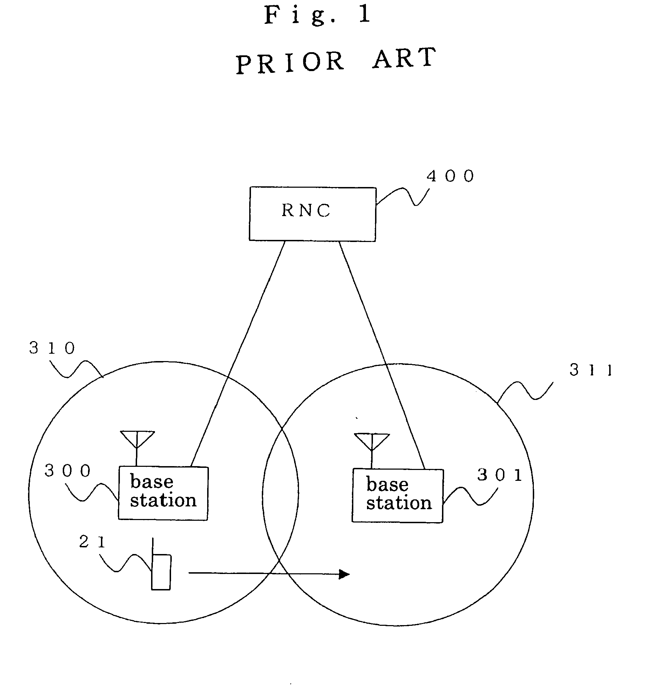

The following explanation regards handover in this type of CDMA mobile communication system with reference to Fig. 1. This CDMA mobile communication system is provided with RNC (Radio Network Controller) 400 and base stations 300 and 301. The RNC in this case refers to a host device that is connected to a plurality of base stations and that performs such functions as setting radio lines between each base station and mobile terminals and controlling handover. Fig. 1 shows a case in which mobile terminal 21, which was within the area of cell 310 of base station 300, moves to cell 311 of base station 301.

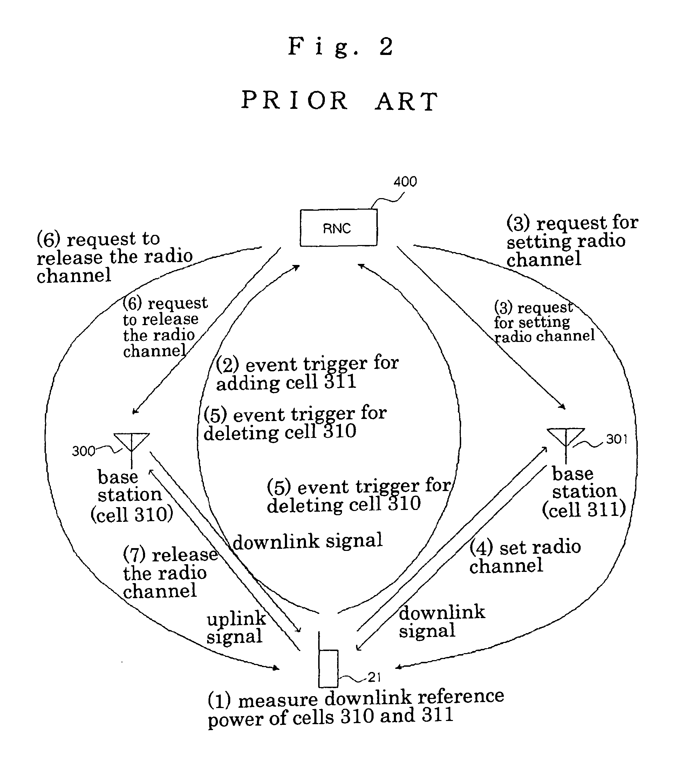

Various methods such as the methods disclosed in JP-A-2000-197092 and JP-A-2003-189368 have been disclosed as active set selection methods for selecting which cells are to be included in an active set. Of these active set selection methods of the prior art, the following explanation with reference to Fig. 2 regards a method in which a mobile terminal measures the reference signal power of the downlink line from each base station to select the active set.
(1) While in the state of call connection to cell 310, mobile terminal 21 regularly measures the downlink reference power of neighboring cell 311.
(2) When the downlink reference signal power of cell 311 increases, mobile terminal 21 transmits, to RNC 400 by way of the radio line that is set with base station 310, a control signal (event trigger) for adding cell 311 to the active set.
(3) RNC 400, having received from mobile terminal 21 the control signal for addition to the active set, requests base station 301 and mobile terminal 21 to set a radio line in cell 311.
(4) Base station 301 and mobile terminal 21, by receiving the request to set a radio line from RNC 400, set a radio line in cell 311 and begin communication.
(5) When the movement of mobile terminal 21 to cell 311 causes the downlink reference signal power of cell 310 to decrease, mobile terminal 21 transmits, to RNC 400 by way of the radio line that is set with base station 300 or base station 301, a control signal (event trigger) for deleting cell 310 from the active set.
(6) RNC 400, having received the event trigger from mobile terminal 21 for deleting cell 310 from the active set, requests base station 300 and mobile terminal 21 to release the radio line.
(7) Base station 300 and mobile terminal 21, having received the request to release the radio line from RNC 400, release the radio line that was set, whereby cell 310 is deleted from the active set.

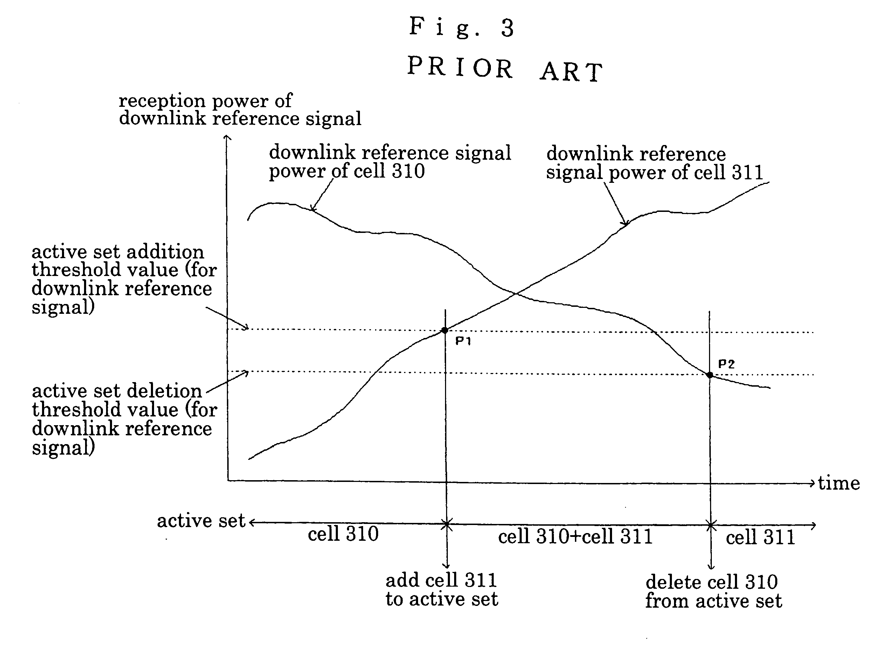

Fig. 3 shows the relation between changes in the downlink reference signal power of cell 310 and cell 311 and the timing of adding cell 311 to the active set and the timing of deleting cell 310 from the active set when the process shown in Fig. 2 is carried out.

Mobile terminal 21 measures the power of the downlink reference signal of cell 310, to which a radio line is currently set, and the power of the downlink reference signal of neighboring cell 311. When the downlink reference signal power of cell 311 that is not included in the active set surpasses the active set addition threshold value (point P1), mobile terminal 21 generates an event trigger for adding cell 311 to the active set and reports to RNC 400.

On the other hand, when the downlink reference signal of cell 310 that is included in the active set falls below the active set deletion threshold value (Point P2), mobile terminal 21 generates an event trigger for deleting cell 310 from the active set and reports to RNC 400.

Handover from cell 310 to cell 311 is implemented by the performance of the above-described process as mobile terminal 21 moves from cell 310 to cell 311.

In recent years, network games or the transmission of moving pictures from mobile terminals has created a demand for high-speed response, and this has led to a demand for the capability to transfer data of great capacity on an uplink line from a mobile terminal to a base station. To meet this demand, new channels called "E-DCH (Enhanced-Dedicated CHannels)" have been introduced in 3GPP TR 25.896, which are standards created by the 3GPP (3^{rd} Generation Partnership Project), a standardization project that investigates international standards for third-generation mobile communication systems. These E-DCH are constructed for transferring data on uplink lines and transferring only control information for data transmission on downlink lines.

The introduction of uplink high-speed signals on these E-DCH necessitates the provision in the base station of a scheduling capability for designating the transmission timing and rate of high-speed uplink signals to mobile terminals or a capability for controlling resending to enable effective use of the limited radio resources by a plurality of users.

In the above-described active set selection method of the prior art, cells that are included in the active set were selected in the mobile terminal based on the reference signal power of the downlink line from each base station. However, uplink and downlink radio propagation environments are not necessarily equal and can vary greatly, and as a result, when handover is implemented by the active set selection method of the prior art for an uplink high-speed signal for transferring data of great capacity on an uplink line, it may not be possible to include in the active set cells in which effective radio lines are set for the uplink high-speed signal.

In other words, if a cell in which the radio propagation environment is good for a downlink line but bad for an uplink line is kept in the active set, a cell that is not effective for an uplink high-speed signal will consequently be included in the active set. Including a particular cell in the active set means that radio lines must be set with a mobile terminal at the base station that constitutes this cell, resulting in the pointless assignment of hardware resources to the mobile terminal.

For uplink high-speed signals in particular, the transfer of data of great capacity on an uplink line normally requires far more hardware resources than an ordinary individual signal to enable reception of the uplink high-speed signal at each base station. As a result, the determination by a mobile terminal of the base stations to be included in the active set based on the downlink reference signal as in the prior art raises the concern that base station hardware resources such as despreading devices will be monopolized to no purpose.

In addition, the control of the addition to or deletion from the active set between a mobile terminal and the RNC as in the CDMA mobile communication system of the prior art is time-consuming and may lead to further waste of hardware resources.

### SUMMARY OF THE INVENTION

It is an object of the present invention to provide a CDMA mobile communication system and base station as well as an active set selection method that enable the selection of, as the cells that are to be included in the active set, only cells that are effective for uplink high-speed signals such as E-DCH.

The present invention is applied to an active set selection method for, when a mobile terminal performs handover between cells, selecting cells that are to be included in the active set, which is a list of cells in which radio lines are set with that mobile terminal.

To achieve the above-described object in the present invention, base stations that constitute cells that are included in the active set first measure the reception states of an uplink high-speed signal that is set for transferring data on an uplink line from a mobile terminal and reports the measurement results to a radio network controller.

The radio network controller then determines cells that are to be deleted from the active set based on the measurement results of the reception states of the uplink high-speed signal that have been reported from the base stations.

The radio network controller then transmits radio line release requests to the base stations and the mobile terminal for releasing the radio lines of the uplink high-speed signal to cells that have been determined to be deleted from the active set.

In addition, in the step in which the base stations measure the reception states of the uplink high-speed signal from the mobile terminal, the base stations may measure the reception SIR of the uplink high-speed signal from the mobile terminal and transmit the measurement results to the radio network controller; and in the step in which the radio network controller determines the cells that are to be deleted from the active set in accordance with the measurement results of the reception states of the uplink high-speed signal that have been reported from the base stations, the radio network controller may determine that a cell is a cell that is to be deleted from the active set when a state in which the reception SIR of the uplink high-speed signal that has been reported from the base stations has fallen to or below an active set deletion SIR threshold value that has been set in advance continues for an active set deletion protection time.

According to the present invention, when, for the purpose of handover in a CDMA mobile communication system, a plurality of base stations receives an uplink high-speed signal from a mobile terminal to base stations, a radio network controller (RNC) monitors the reception states of the uplink high-speed signal that are measured by each base station and, by releasing radio lines having poor reception states, deletes unnecessary cells from the active set. Accordingly, base station hardware resources such as despreading devices that are necessary for the reception of uplink high-speed signals can be more effectively utilized.

In addition, according to another active set selection method of the present invention, base stations that constitute cells that are included within the active set measure the reception states from a mobile terminal of the uplink high-speed signal that is set for transferring data on an uplink line.

The base stations then determine cells that are to be deleted from the active set according to the measurement results of the reception states of the uplink high-speed signal that have been measured.

The base stations then report to the radio network controller requests for disconnecting the uplink high-speed signal that is set to cells that have been determined as cells to be deleted from the active set.

Finally, the radio network controller transmits radio line release requests to the base stations and the mobile terminals for releasing the radio lines of the uplink high-speed signal for which the disconnection requests have been received from the base stations. In the present invention, when a plurality of base stations receives an uplink high-speed signal from a mobile terminal to base stations for the purpose of handover in a CDMA mobile communication system, cells that are to be deleted from the active set are determined based on the reception states of the uplink high-speed signal that have been measured by the base stations themselves, and the base stations submit to the radio network controller requests to disconnect radio lines that correspond to the cells for which deletion has been determined. The radio network controller then brings about the release of radio lines in accordance with these disconnection requests, whereby the control of the active set for uplink high-speed signals can be realized at higher speed than the control of the active set for ordinary individual signals, and unnecessary cells can be deleted from the active set to suppress the waste of the hardware resources of base stations.

In addition, the effective use of hardware resources in accordance with the amount of traffic can be realized by transmitting requests to the radio network controller to disconnect uplink high-speed signals only when the utilization of hardware resources is high in base stations.

Still further, the base stations may, instead of transmitting radio line disconnect requests to the radio network controller, transmit to the radio network controller the data of only control signals as the data of uplink high-speed signals that are to be disconnected or report to the radio network controller an out-of-step state with uplink high-speed signals that are to be disconnected.

As described in the foregoing explanation, according to the present invention, the radio network controller or each base station for an uplink high-speed signal implements control of whether to delete the radio line of each cell from the active set in accordance with the reception state of the uplink high-speed signal. As a result, the selection of the active set for an uplink high-speed signal at the time of handover can be realized with greater efficiency, and the waste of the hardware resources of base stations can be suppressed.

In addition, the above-described control is under the initiative of base stations, whereby the control of the active set for an uplink high-speed signal can be realized at higher speed than the control of the active set for an ordinary individual signal.

Finally, the deletion of unnecessary active sets has the effect of minimizing the radio resources that are used for downlink control signals.

The above and other objects, features and advantages of the present invention will become apparent from the following description with reference to the accompanying drawings, which illustrate examples of the present invention.

### BRIEF DESCRIPTION OF THE DRAWINGS

Fig. 1 is an explanatory view of handover in a CDMA mobile communication system;
Fig. 2 is an explanatory view of the method for adding to and deleting from the active set for an uplink signal in the prior art;
Fig. 3 is an explanatory view of the method for adding to and deleting from the active set for an uplink signal in the prior art;
Fig. 4 is an explanatory view of the active set selection method according to the first embodiment of the present invention;
Fig. 5 is an explanatory view of the active set selection method according to the second embodiment of the present invention;
Fig. 6 is an explanatory view of a specific example of the deletion conditions of an active set for an uplink high-speed signal by means of a base station;
Fig. 7 is an explanatory view of a specific example of the deletion conditions of an active set for an uplink high-speed signal by means of a base station;
Fig. 8 is an explanatory view of the active set selection method according to the third embodiment of the present invention;
Fig. 9 is an explanatory view of the active set selection method according to the fourth embodiment of the present invention; and
Fig. 10 is an explanatory view of the active set selection method according to the fifth embodiment of the present invention.

### DETAILED DESCRIPTION OF THE PREFERRED EMBODIMENTS

### First Embodiment:

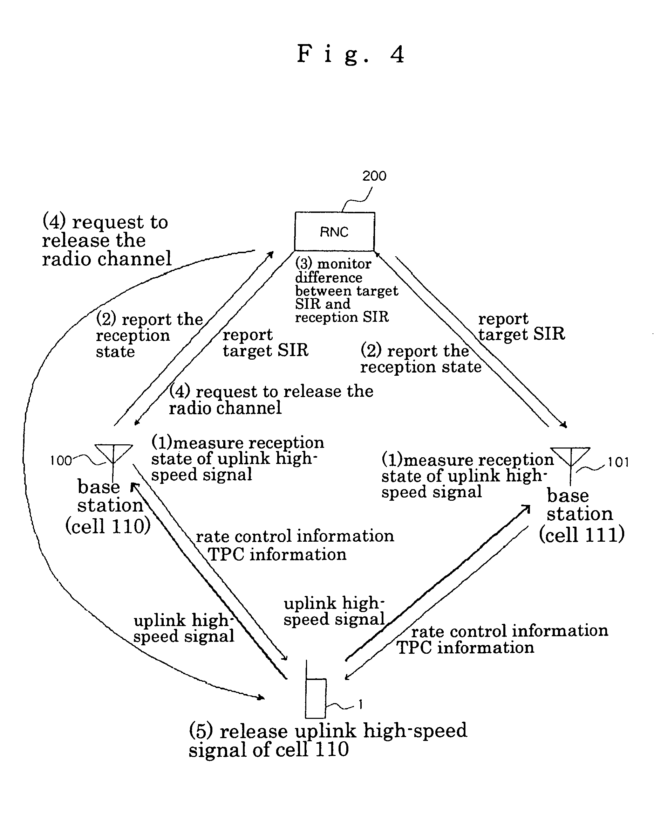

Fig. 4 shows the method by which an RNC performs deletion control of an active set when base stations that constitute the cells in an active set are receiving an uplink high-speed signal from a mobile terminal when the uplink high-speed signal is in the handover state.

The CDMA mobile communication system of the present embodiment is provided with RNC (Radio Network Controller) 200 and base stations 100 and 101. The following explanation regards a case in which mobile terminal 1 moves from cell 110 that is made up by base station 100 to cell 111 that is made up by base station 101.

As shown in Fig. 4, base stations 100 and 101 that constitute cells 110 and 111 that are included in the active set for mobile terminal 1 not only transmit downlink control signals for designating the transmission power and transmission rate for the uplink high-speed signal from mobile terminal 1, but also measure the reception state (for example, the reception SIR (Signal-to-Interference power Ratio) for the uplink high-speed signal and report to RNC 200.

RNC 200 sets the target SIR in each of base stations 100 and 101 to achieve the necessary quality such as the block error rate, but when the reception SIR that is reported from base station 100 does not improve on the target SIR that has been set, RNC 200 transmits to base station 100 and mobile terminal 1 requests to release the radio line of the uplink high-speed signal that extends to cell 110.

The active set selection method in the CDMA mobile communication system according to the present embodiment is characterized by the lead that RNC 200 takes in determining deletion from the active set. In addition, the active set selection method according to the present embodiment adds a new process to the method of the prior art when deleting a cell from the active set when performing handover of an uplink high-speed signal, but is otherwise equivalent to the method of the prior art. In other words, addition to the active set or deletion from the active set is performed in accordance with the prior art for normal channels other than an uplink high-speed signal such as E-DCH. In addition, the process for adding to the active set for an uplink high-speed signal is equivalent to the process of the prior art, and the process for deleting from the active set also remains the same as the process that is carried out in the prior art, and processes according to the present invention are only new additions.

When a mobile terminal is performing handover between cells, the RNC in the present embodiment: determines cells that are to be deleted from the active set in accordance with the results of measuring the reception states of the uplink high-speed signal that are reported from the base stations that make up the cells that are included in the active set that has been set for the mobile terminal, and transmits to the base stations and the mobile terminal a radio line release request for releasing the radio lines of the uplink high-speed signal that are set for cells that have been determined as cells to be deleted from the active set.

The following explanation regards the processes of the active set selection method with reference to Fig. 4.

RNC 200 first reports the target SIR in advance to base stations 100 and 101. RNC 200 also receives reports on the reception states of the downlink reference signal of each of base stations 100 and 101 from mobile terminal 1, determines the active set for the signal of mobile terminal 1, and sets radio lines such that an uplink signal from mobile terminal 1 can be received in base stations 100 and 101.
(1) Each of the base stations 100 and 101 that make up cells 110 and 111 that are included in the active set uses a reception pilot signal for the uplink high-speed signal from mobile terminal 1 to measure the reception state such as the reception SIR and transmits control signals such as transmission power control (TPC) information or rate control (Rate Grant) information of the uplink high-speed signal as a downlink control signal to mobile terminal 1 such that the reception SIR matches the target SIR that is reported from RNC 200.
(2) Each of base stations 100 and 101 periodically reports the reception state for the uplink high-speed signal to RNC 200. Mobile terminal 1 receives a control signal from each of the base stations 100 and 101 of the active set, and synthesizes or selects these control signals to set, for example, the transmission power or the transmission rate of the uplink high-speed signal.
   At this time, when, for example, base station 100 and base station 101 transmit different control signals and mobile terminal 1 transmits an uplink high-speed signal in accordance with the control signal of base station 101, the possibility exists that the reception state for the uplink high-speed signal that is measured at base station 100 may further deteriorate. When mobile terminal 1 subsequently continues to transmit the uplink high-speed signal in accordance with the control signal of base station 101, the reception SIR of the uplink high-speed signal that is received at base station 100 enters a state that does not improve with respect to the target SIR that is set from RNC 200.
(3) RNC 200 monitors the difference between the target SIR that is set in each of base stations 100 and 101 from RNC 200 and the reception SIR that is reported from each of base stations 100 and 101, and when, for example, the difference between the reception SIR of base station 100 with respect to the target SIR does not improve, RNC 200 determines that mobile terminal 1 is transmitting the uplink high-speed signal in accordance with a downlink control signal of a base station other than base station 100.
(4) RNC 200 then transmits a control signal for releasing the uplink high-speed signal to mobile terminal 1 and base station 100 for disconnecting the uplink high-speed signal radio line that is set in base station 100.

According to the active set selection method of the present embodiment, the reception state of the uplink high-speed signal is measured at base stations 100 and 101, the measurement results are reported to RNC 200, and cells that are to be deleted from the active set are determined at RNC 200 based on the measurement results of the uplink high-speed signal that have been reported. As a result, when performing handover of an uplink high-speed signal of, for example, an E-DCH that is set for transferring data on an uplink line, it is possible to leave only appropriate cells in the active set as compared with a case in which the cells to be deleted from the active set are determined based on the downlink reference power, as in the prior art. As a result, the potential to delete ineffective cells from the active set can be raised, and the hardware resources for receiving high-speed signals in base stations can be used more effectively.

Although a single active set is provided for each mobile terminal, there is a possibility in the future for the separate provision of active sets when a single mobile terminal simultaneously transmits and receives a high-speed downlink signal (high-speed downlink packet access: HSPDA) and high-speed uplink signal (E-DCH).

### Second Embodiment:

The following explanation regards the active set selection method according to the second embodiment of the present invention.

In the active set selection method according to the first embodiment described hereinabove, the RNC took the lead in the deletion of the active set based on the reception states of an uplink high-speed signal that are measured by base stations. In contrast, the active set selection method according to the second embodiment of the present invention presents a method for controlling deletion of the active set under the lead of the base stations.

When a mobile terminal performs handover between cells, base stations in the present embodiment measure the reception states of an uplink high-speed signal on the radio lines that are set with the mobile terminal, determine cells to be deleted from the active set in accordance with the measurement results of the reception states of the uplink high-speed signal that have been measured, and reports to the RNC a request to disconnect the uplink high-speed signal that is set to cell that are determined as cells to be deleted from the active set. Then, in the RNC that has been notified of this disconnection request from the base station, a radio line release request for releasing the radio lines of the uplink high-speed signal for which the disconnection request has been reported is transmitted to mobile terminal 1.

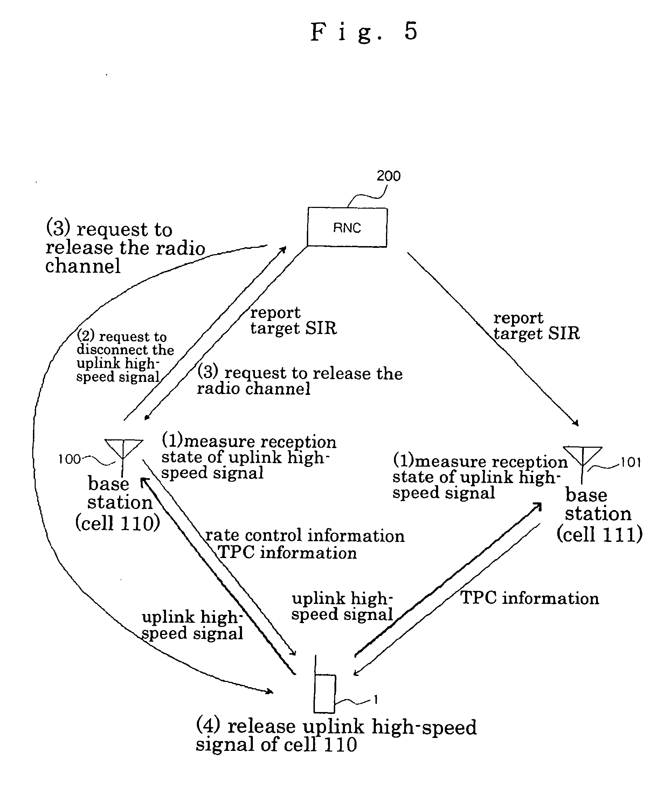

The following explanation regards the active set selection method of the present embodiment with reference to Fig. 5. In Fig. 5, a method is considered in which base station 100 monitors the reception SIR, and when the reception SIR is not improved with respect to the target SIR that is set from RNC 200, base station 100 sends a line disconnection request to RNC 200 for deletion from the active set of mobile terminal 1. RNC 200, having received the line disconnection request from base station 100, transmits a radio line release request to base station 100 and mobile terminal 1 for the uplink high-speed signal that extends to cell 110.

The processes of this embodiment are explained sequentially based on Fig. 5.
(1) Each of the base stations 100 and 101 that make up cells 110 and 111 that are included in the active set both measure the reception state of the uplink high-speed signal and monitor the difference between the reception SIR and the target SIR that is reported from RNC 200.
(2) When the reception SIR is not improved with respect to the target SIR of the uplink high-speed signal in base station 100 as in the case shown in Fig. 4, base station 100 determines that mobile terminal 1 is transmitting the uplink high-speed signal in accordance with the control signal of another base station 101, and base station 100 reports to RNC 200 a request to disconnect the uplink high-speed signal.
(3) Upon receiving the disconnection request from base station 100, RNC 200 transmits to base station 100 and mobile terminal 1 a control signal such that the radio line of the uplink high-speed signal is released in order to delete base station 100 from the active set.
(4) Then, having received the radio line release request from RNC 200, base station 100 releases the radio line that is set with mobile terminal 1, and mobile terminal 1 releases the radio line that is set with base station 100, whereby base station 100 is deleted from the active set.

In addition, when the request to disconnect the line of the uplink high-speed signal is submitted to the RNC under the lead of the base station as in the present embodiment, a capability may be provided for monitoring the utilization rate of the hardware resources for receiving uplink high-speed signals such as despreading devices in the base station, and the uplink high-speed signal disconnection request that is shown in Fig. 5 may be transmitted to the RNC only when the utilization rate of resources surpasses a particular value. In this case, the utilization rate of hardware resources refers to, for example, the proportion of the hardware provided in a base station that is actually being used. For example, the uplink high-speed signal disconnection request may be transmitted to the RNC when 70% or more of the despreading devices that are provided in a base station are being used.

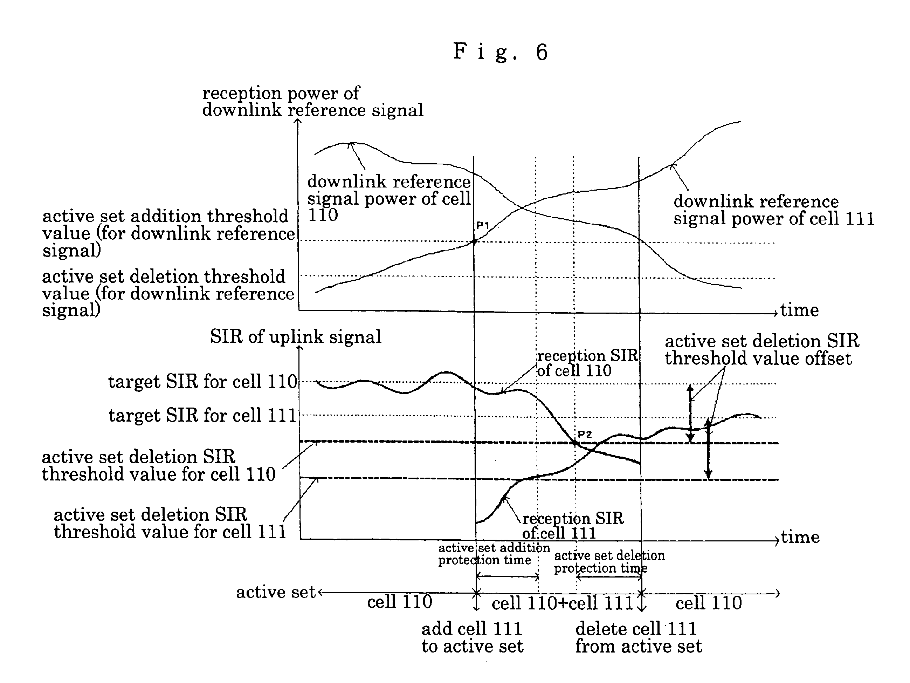

The following explanation with reference to Figs. 6 to 8 regards the relations between changes in the reception state of the uplink high-speed signal and the timing of cell addition to the active set or the timing of deletion of a cell from the active set in the active set selection methods according to the above-described first and second embodiments.

The following explanation regards a case in which the reception SIR is used as the reception state of the uplink high-speed signal. In addition, the RNC or a base station determines the reception state according to whether the reception SIR of the uplink high-speed signal falls to or below the active set deletion SIR threshold value. In this case, the active set deletion SIR threshold value is calculated by subtracting an active set deletion SIR threshold value offset from a target SIR that is set for each cell.

In addition, the active set deletion SIR threshold value offset and the active set deletion protection time are parameters that are set for each of RNC 200 or base stations 100 and 101; deletion from an active set for an uplink high-speed signal being progressively more difficult with higher values that are set for these parameters.

The RNC or a base station then determines a cell to be a cell that is to be deleted from the active set when a state in which the reception SIR of an uplink high-speed signal is equal to or falls below the active set deletion SIR threshold value that has been set in advance continues for the time interval of an active set deletion protection time, whereby a cell is not deleted from an active set by mistake due to, for example, some extraneous incidence of noise.

Further, although there is a possibility that the reception SIR immediately following the addition of the cell in a cell that has been added to the active set may fall below the active set deletion SIR threshold value, protection is provided such that RNC 200 or base stations 100 and 101 will not release the uplink high-speed signal even if the reception SIR in this state falls below the active set deletion SIR threshold value during the active set addition protection time. In other words, when the reception power of the downlink reference signal surpasses the active set addition threshold value and a particular base station has been added to the active set, RNC 200 or base stations 100 and 101 do not compare the reception SIR of the uplink high-speed signal and the active set deletion SIR threshold value until the active set addition protection time has elapsed.

The appropriate setting of these parameters can prevent the erroneous deletion from the active set for instantaneous deterioration of reception states such as fading in the propagation environment.

Fig. 6 shows the operations when RNC 200 or base stations 100 and 101 in the active set release the uplink high-speed signal of a cell in which the reception state is poor and perform deletion from the active set.

In a case in which cell 111 is added at point P1 as the active set for the uplink high-speed signal from mobile terminal 1, when mobile terminal 1 changes the transmission power and transmission rate of the uplink high-speed signal in accordance with the downlink control signal of cell 111, the reception SIR for the uplink signal in cell 111 approaches the target SIR that has been designated from RNC 200.

However, when the control signal that is transmitted from base station 100 of cell 110 differs from the control signal that is transmitted from cell 111, the uplink high-speed signal is transmitted without following the transmission power or transmission rate that has been requested in cell 110, and the reception SIR for the uplink high-speed signal in cell 110 therefore deteriorates without approaching the target SIR.

If the reception SIR of the uplink high-speed signal from mobile terminal 1 then falls below the active set deletion SIR threshold value at point P2 and this state continues for the time interval of the active set deletion protection time, RNC 200 or base station 100 of cell 110 releases the uplink high-speed signal of cell 110.

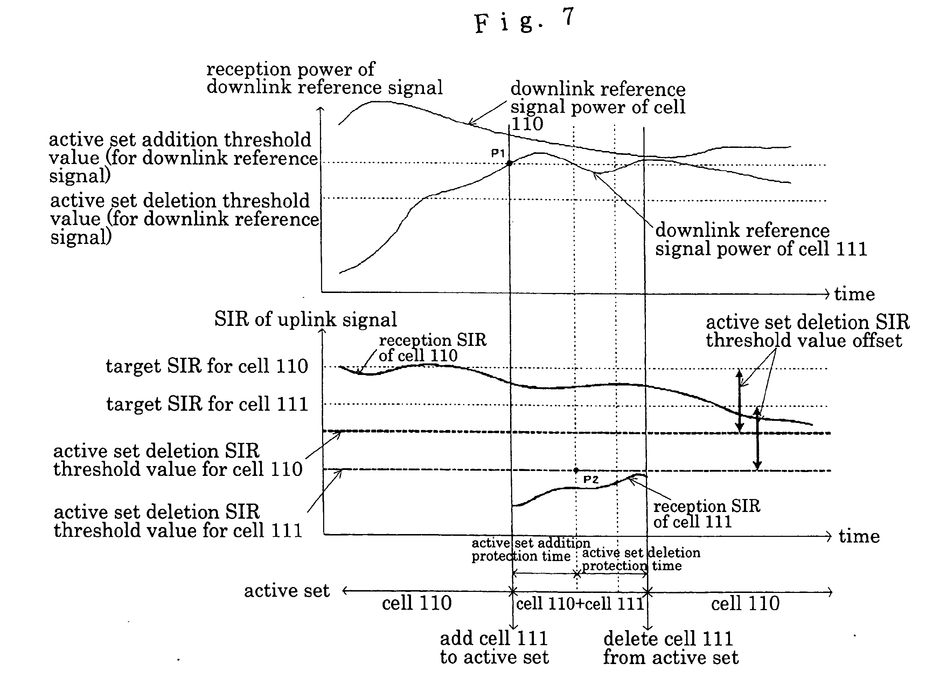

Fig. 7 shows the control method in a reception state that differs from that of Fig. 6. In some cases, despite the addition of cell 111 to the active set at point P1, when mobile terminal 1 transmits an uplink high-speed signal in accordance with the downlink control signal of cell 110, the reception SIR for the uplink high-speed signal that is measured at base station 101 of cell 111 does not improve with respect to the target SIR. RNC 200 or base station 101 of cell 111 does not perform active set deletion during the active set addition protection time even when the reception SIR falls below the active set deletion SIR threshold value, but when the active set addition protection time has elapsed and the reception SIR of cell 111 does not attain the active set deletion SIR threshold value even after the passage of the active set deletion protection time from the time point of point P2, RNC 200 or base station 101 of cell 111 deletes cell 111 for the uplink high-speed signal from the active set.

### Third Embodiment:

The following explanation regards the active set selection method according to the third embodiment of the present invention.

In the above-described first and second embodiments, an active set deletion protection time was provided whereby, despite the fall of the reception SIR of the uplink high-speed signal in a particular cell to or below the active set deletion SIR threshold value, the cell was not deleted from the active set until the active set deletion protection time has elapsed. However, in the event of a drastic change in the radiowave state of a particular cell due to the movement of mobile terminal 1, it is sometimes preferable to delete the cell from the active set without waiting for the passage of the active set deletion protection time.

The active set selection method in this embodiment takes this type of case into consideration, and the RNC or each base station thus uses two values, a first active set deletion SIR threshold value offset and second active set deletion SIR threshold value offset, as conditions when performing active set deletion. Here, the first and the second active set deletion SIR threshold value offsets are set such that the following conditions are met. In other words, the second active set deletion SIR threshold value is a value that is less than the first active set deletion SIR threshold value.

First active set deletion SIR threshold value offset 1 <

Second active set deletion SIR threshold value offset 2 When the reception SIR of the uplink high-speed signal of a particular cell falls to or below the second active set deletion SIR threshold value, the RNC or each base station determines the deletion of that cell from the active set without waiting for the passage of the active set deletion protection time.

The first and second active set deletion SIR threshold values are calculated by subtracting first and second active set deletion SIR threshold value offsets from the target SIR that is set for each cell.

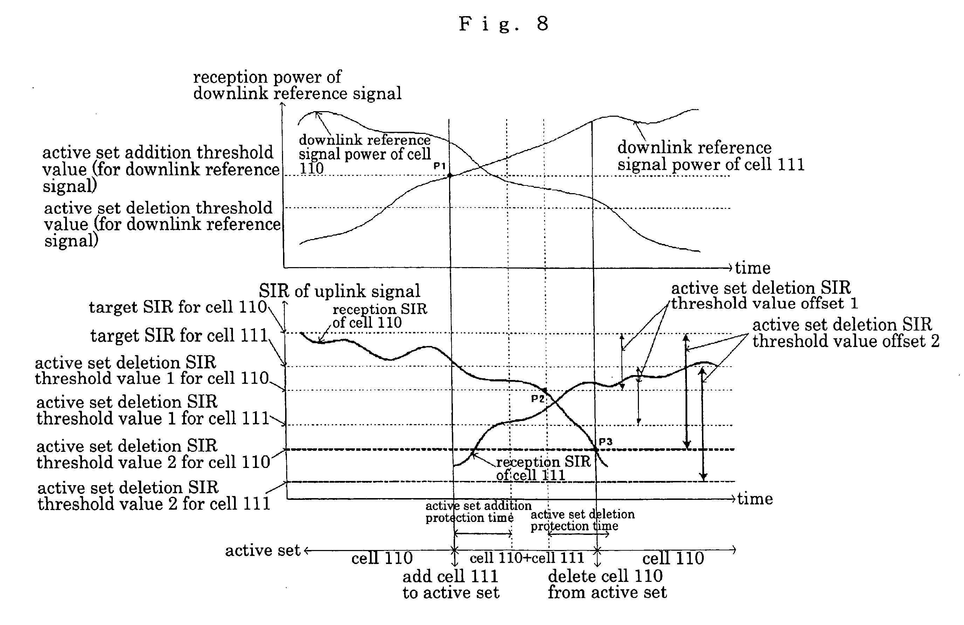

Fig. 8 shows the operations in the active set selection method of the present embodiment. In Fig. 8, the deterioration of the propagation environment of cell 110 becomes drastic, and when the reception SIR for the uplink high-speed signal consequently falls below the first active set deletion SIR threshold value (active set deletion SIR threshold value 1), and further, falls below the second active set deletion SIR threshold value (active set deletion SIR threshold value 2) at point P3, RNC 200 or base station 100 can perform the active set deletion process for the uplink high-speed signal of cell 110 at point P3 without waiting for the passage of the active set deletion protection time.

According to the active set selection method of the present embodiment, the control of active set deletion is accelerated when the propagation environment undergoes drastic deterioration to allow a suppression of waste of the hardware resources of a base station.

### Fourth Embodiment:

The following explanation regards the active set selection method according to the fourth embodiment of the present invention. The active set selection method in the present embodiment is another method for a case in which the base station takes the lead in deleting a particular cell from the active set when the reception state of the uplink high-speed signal of the cell has become poor.

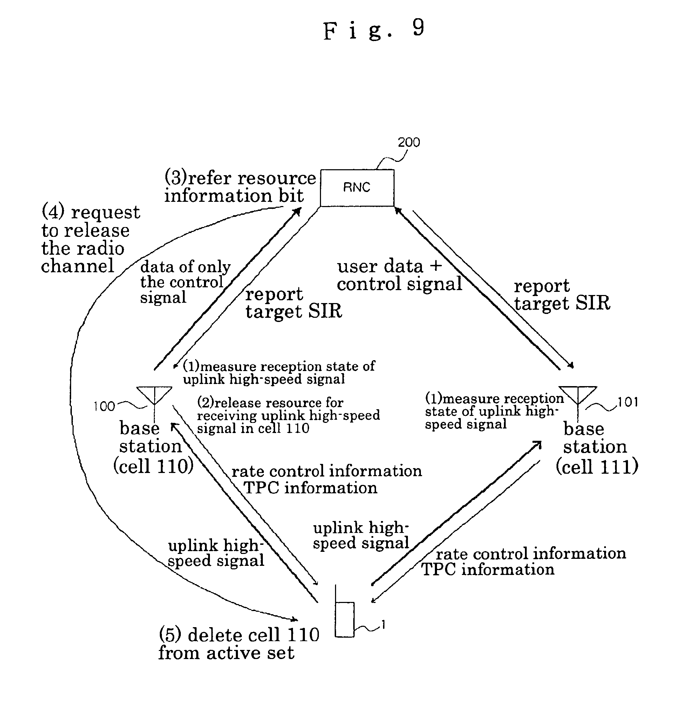

Fig. 9 shows a case in which the uplink high-speed signal is being received correctly in cell 111 in the active set of the uplink high-speed signal, but cannot be received correctly in cell 110.

Normally, when the uplink high-speed signal is received correctly as in cell 111, base station 101 adds a control signal to the received user data and transmits to RNC 200, but when the reception state deteriorates as in cell 110 and the conditions for deletion from the active set have been satisfied as shown in Fig. 6 or Fig. 7, base station 100 releases the hardware resources for receiving uplink high-speed signals from the relevant mobile terminal 1 and transmits to RNC 200 data of only the control signal as the data of the uplink high-speed signal from mobile terminal 1.

Base station 100 adds to the control signal information bits that indicate whether base station 100 has already released the hardware resources for the uplink high-speed signal from mobile terminal 1 and transmits to RNC 200. Upon receiving the data of only the control signal, RNC 200 refers to the above-described information bits and, if base station 100 has already released the resources, transmits to mobile terminal 1 a request to disconnect the radio line for cell 110.

According to the active set selection method of the present embodiment, a cell that is to be deleted from the active set can be communicated by merely transmitting data of only a control signal and without transmitting an uplink high-speed signal disconnection request from a base station to the RNC.

### Fifth Embodiment:

The following explanation regards the active set selection method according to the fifth embodiment of the present invention. The active set selection method of this embodiment is yet another method for a case in which a base station takes the lead in deleting a particular cell from the active set when the reception state of the uplink high-speed signal of the cell has deteriorated.

In the case of the second embodiment that is shown in Fig. 5, when the conditions for deleting from the active set were met at a base station, a request to disconnect the uplink high-speed signal was transmitted to the RNC, but this case necessitated dedicated signaling between the base station and the RNC. The present embodiment is capable of realizing the present invention without altering the prior-art communication specifications between the base station and the RNC.

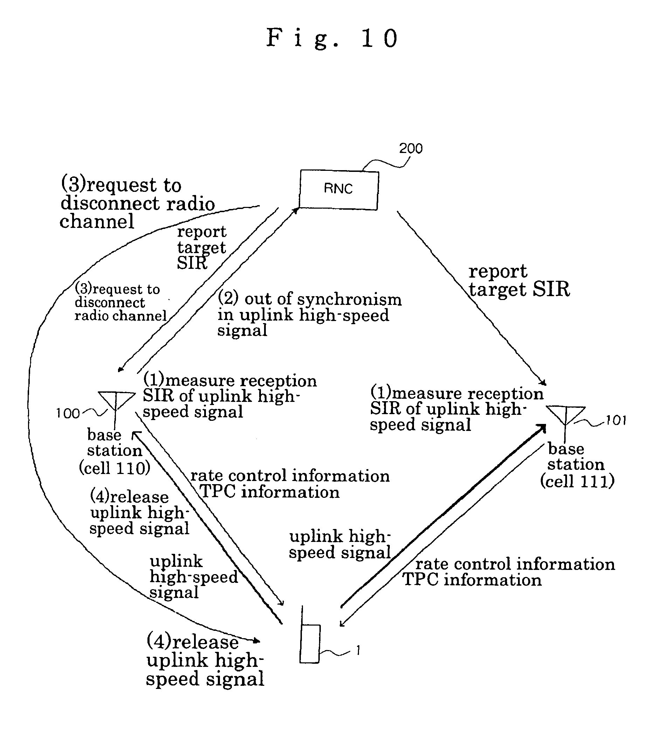

The following explanation regards the active set selection method of the present embodiment with reference to Fig. 10. When the conditions for deletion from the active set have been met at base station 100 in the present embodiment, an "out-of-step" state for the object uplink high-speed signal is reported to RNC 200. Upon receiving the "out of step" from the base station, RNC 200 releases the radio line, and the same effect as the second embodiment shown in Fig. 5 can therefore be expected without the necessity for dedicated signaling.

While preferred embodiments of the present invention have been described using specific terms, such description is for illustrative purposes only, and it is to be understood that changes and variations may be made without departing from the spirit or scope of the following claims.

## Claims

1. An active set selection method for selecting cells that are to be included in an active set when a mobile terminal performs handover between cells, an active set being a list of cells in which radio lines are set with the mobile terminal, said active set selection method comprising steps wherein:
base stations that constitute cells that are included in said active set measure the reception states from the mobile terminal of an uplink high-speed signal that is set for transferring data on an uplink line and report the measurement results to a radio network controller;
the radio network controller determines cells that are to be deleted from the active set in accordance with the measurement results of the reception states of the uplink high-speed signal that have been reported from said base stations; and
said radio network controller transmits to the base stations and the mobile terminal radio line release requests for releasing the radio lines of the uplink high-speed signal that is set to cells that have been determined as cells to be deleted from the active set.

2. An active set selection method according to claim 1, wherein:
in the step wherein base stations measure the reception states of the uplink high-speed signal from the mobile terminal, the base stations measure the reception SIR of the uplink high-speed signal from the mobile terminal and transmit the measurement results to the radio network controller; and
in the step wherein the radio network controller determines cells that are to be deleted from the active set in accordance with the measurement results of the reception states of the uplink high-speed signal that have been reported from the base stations, the radio network controller determines a cell as a cell to be deleted from the active set when a state in which the reception SIR of the uplink high-speed signal in that cell that has been reported from said base stations has fallen to or below an active set deletion SIR threshold value that has been set in advance continues for an active set deletion protection time.

3. An active set selection method according to claim 2, wherein said active set deletion SIR threshold value is a value obtained by subtracting an active set deletion SIR threshold value offset from a target SIR that is set for each cell.

4. An active set selection method according to claim 2, wherein said radio network controller does not compare the reception SIR of a particular cell with said active set deletion SIR threshold value until an active set addition protection time has elapsed from the addition of that cell to the active set.

5. An active set selection method according to claim 1, wherein:
in the step wherein base stations measure the reception states of an uplink high-speed signal from a mobile terminal, the base stations measure the reception SIR of the uplink high-speed signal from the mobile terminal and transmit the measurement results to a radio network controller; and
in the step wherein the radio network controller determines cells that are to be deleted from the active set in accordance with the measurement results of reception states of the uplink high-speed signal that have been reported from the base stations, the radio network controller determines a cell as a cell to be deleted from the active set when a state in which the reception SIR of the uplink high-speed signal of that cell that has been reported from said base stations has fallen to or below a first active set deletion SIR threshold value that has been set in advance continues for an active set deletion protection time, or when the reception SIR of the uplink high-speed signal of that cell falls to or below a second active set deletion SIR threshold value that is a value that is lower than said first active set deletion SIR threshold value.

6. An active set selection method according to claim 5, wherein said first and second active set deletion SIR threshold values are values obtained by subtracting first and second active set deletion SIR threshold value offsets, respectively, from a target SIR that is set for each cell.

7. An active set selection method for selecting cells that are to be included in an active set when a mobile terminal performs handover between cells, an active set being a list of cells in which radio lines are set with the mobile terminal, said active set selection method comprising steps wherein:
base stations that constitute cells that are included in said active set measure the reception states from the mobile terminal of an uplink high-speed signal that is set for transferring data on an uplink line;
said base stations determine cells that are to be deleted from the active set in accordance with the measurement results of the reception states of the uplink high-speed signal that have been measured;
said base stations report a request to a radio network controller to disconnect the uplink high-speed signal that is set to a cell that has been determined as a cell to be deleted from the active set; and
the radio network controller transmits a radio line release request to the base stations and the mobile terminal to release the radio lines of the uplink high-speed signal for which a disconnection request, which has been received from said base stations, has been received.

8. An active set selection method according to claim 7, wherein:
in the step wherein said base stations report to the radio network controller requests to disconnect the uplink high-speed signal that is set to cells that have been determined to be deleted from the active set,
said base stations monitor the utilization rate of hardware resources for receiving uplink high-speed signals and transmit to the radio network controller requests to disconnect the uplink high-speed signal only when the utilization rate is higher than a value that has been set in advance.

9. An active set selection method for selecting cells that are to be included in an active set when a mobile terminal performs handover between cells, an active set being a list of cells in which radio lines are set with the mobile terminal, said active set selection method comprising steps wherein:
base stations that constitute cells that are included in said active set measure the reception states from the mobile terminal of an uplink high-speed signal that is set for transferring data on an uplink line;
said base stations determine cells that are to be deleted from the active set in accordance with the measurement results of the reception states of the uplink high-speed signal that have been measured;
said base stations transmit to the radio network controller data of only a control signal as the data of the uplink high-speed signal that is set to cells that have been determined to be deleted from the active set; and
the radio network controller transmits a radio line release request to the mobile terminal to release the radio lines of the uplink high-speed signal in accordance with the data of only the control signal that has been received from said base stations.

10. An active set selection method for selecting cells that are to be included in an active set when a mobile terminal performs handover between cells, an active set being a list of cells in which radio lines are set with the mobile terminal, said active set selection method comprising steps wherein:
base stations that constitute cells that are included in said active set measure the reception states from the mobile terminal of an uplink high-speed signal that is set for transferring data on an uplink line;
said base stations determine cells that are to be deleted from the active set in accordance with the measurement results of the reception states of the uplink high-speed signal that have been measured;
said base stations report to the radio network controller an out-of-step state for the uplink high-speed signal that is set to cells that have been determined as cells to be deleted from the active set; and
the radio network controller transmits a radio line release request to the mobile terminal to release the radio lines of the uplink high-speed signal for which the out-of-step state has been reported from said base stations.

11. An active set selection method according to claim 7, wherein:
in the step wherein base stations measure the reception states of an uplink high-speed signal from a mobile terminal, the base stations measure the reception SIR of the uplink high-speed signal from the mobile terminal and transmit the measurement results to the radio network controller; and
in the step wherein the base stations determine cells to be deleted from the active set in accordance with the measurement results of the reception states of the uplink high-speed signal that have been measured, the base stations determine a cell as a cell to be deleted from the active set when a state in which the reception SIR of the uplink high-speed signal of that cell that has been measured falls to or below an active set deletion SIR threshold value that has been set in advance continues for an active set deletion protection time.

12. An active set selection method according to claim 11, wherein said active set deletion SIR threshold value is a value obtained by subtracting an active set deletion SIR threshold value offset from a target SIR that is set for each cell.

13. An active set selection method according to claim 11, wherein said base stations do not compare the reception SIR of a particular cell with said active set deletion SIR threshold value until an active set addition protection time has elapsed from the addition of that cell to the active set.

14. An active set selection method according to claim 7, wherein:
in the step wherein the base stations measure the reception states of the uplink high-speed signal from a mobile terminal, the base stations measure the reception SIR of the uplink high-speed signal from the mobile terminal and transmit the measurement results to a radio network controller; and
in the step wherein the base stations determine cells to be deleted from the active set in accordance with the measurement results of the reception states of the uplink high-speed signal that have been measured, the base stations determine that a cell is a cell to be deleted from the active set when a state in which the reception SIR of the uplink high-speed signal in that cell that has been measured falls to or below a first active set deletion SIR threshold value that has been set in advance continues for an active set deletion protection time, or when the reception SIR of the uplink high-speed signal in that cell that has been measured falls to or below a second active set deletion SIR threshold value that is a value that is lower than said first active set deletion SIR threshold value.

15. An active set selection method according to claim 14, wherein said first and second active set deletion SIR threshold values are values that are obtained by subtracting a first and second active set deletion SIR threshold value offsets, respectively, from the target SIR that has been set for each cell.

16. An active set selection method according to claim 1, wherein said uplink high-speed signal is an E-DCH that is defined in the standards created by the 3GPP.

17. A radio network controller that is connected by cables to a plurality of base stations for setting radio lines to each base station and controlling handover; wherein, when a mobile terminal performs handover between cells, said radio network controller: determines cells that are to be deleted from an active set, said active set being a list of cells in which radio lines are set with the mobile terminal, in accordance with measurement results of the reception states of an uplink high-speed signal that have been reported from base stations that constitute cells that are included in the active set, and transmits to the base stations and the mobile terminal radio line release requests for releasing radio lines of the uplink high-speed signal that are set to cells that have been determined as cells to be deleted from the active set.

18. A radio network controller according to claim 17, wherein said radio network controller determines a cell as a cell to be deleted from the active set when a state in which the reception SIR for that cell that has been reported as the measurement results of the reception state of the uplink high-speed signal from said base stations has fallen to or below an active set deletion SIR threshold value that has been set in advance continues for an active set deletion protection time.

19. A base station that sets radio lines with mobile terminals based on control from a radio network controller, wherein, when a mobile terminal performs handover between cells, said base station measures the reception states of an uplink high-speed signal on the radio lines that are set with that mobile terminal, determines cells that are to be deleted from the active set in accordance with the measurement results of the reception states of the uplink high-speed signal that have been measured, and reports to the radio network controller a request to disconnect the uplink high-speed signal that is set to cells that have been determined as cells to be deleted from the active set.

20. A base station according to claim 19, wherein said base station is provided with a means for monitoring the utilization rate of hardware resources for receiving uplink high-speed signals and transmits to the radio network controller an uplink high-speed signal disconnection request when the utilization rate is higher than a value that has been set in advance.

21. A base station that sets radio lines with mobile terminals based on control from a radio network controller, wherein, when a mobile terminal performs handover between cells, said base station measures the reception states of an uplink high-speed signal on the radio lines that are set with that mobile terminal, determines cells that are to be deleted from the active set in accordance with the measurement results of the reception states of the uplink high-speed signal that have been measured; and transmits to the radio network controller data of only a control signal as data of the uplink high-speed signal that is set to cells that have been determined as cells to be deleted from the active set.

22. A base station that sets radio lines with mobile terminals based on control from a radio network controller; wherein, when a mobile terminal performs handover between cells, said base station measures the reception states of the uplink high-speed signal on the radio lines that are set with that mobile terminal, determines cells to be deleted from the active set in accordance with the measurement results of the reception states of the uplink high-speed signal that have been measured, and reports to the radio network controller an out-of-step state for the uplink high-speed signal that is set to cells that have been determined as cells to be deleted from the active set.

23. A base station according to claim 19, wherein said base station measures reception SIR of the uplink high-speed signal as the reception state of the uplink high-speed signal from the mobile terminal and determines a cell as a cell to be deleted from the active set when a state in which the reception SIR of that cell that has been measured has fallen to or below an active set deletion SIR threshold value that has been set in advance continues for an active set deletion protection time.

24. A CDMA mobile communication system comprising:
mobile terminals that are capable of simultaneously setting radio lines with a plurality of base stations;
base stations: that set radio lines with said mobile terminals based on control from a radio network controller; that, when a said mobile terminal performs handover, measure the reception states from said mobile terminal of an uplink high-speed signal that has been set for transferring data on an uplink line; and that report to the radio network controller the results of measurement; and
a radio network controller: that is connected by cables to a plurality of base stations; that determines cells that are to be deleted from an active set, an active set being a list of cells in which radio lines are set with said mobile terminal, in accordance with measurement results of the reception states of the uplink high-speed signal that have been reported from base stations that constitute cells that are included in the active set; and that transmits to said base stations and said mobile terminal a radio line release request for releasing the radio lines of the uplink high-speed signal that are set to cells that have been determined as cells to be deleted from the active set.

25. A CDMA mobile communication system comprising:
mobile terminals that are capable of simultaneously setting radio lines with a plurality of base stations;
base stations: that set radio lines with mobile terminals based on control from a radio network controller; that, when a said mobile terminal performs handover between cells, measure the reception states of an uplink high-speed signal on radio lines that have been set with the mobile terminal; that determine cells to be deleted from the active set in accordance with the measurement results of the reception states of the uplink high-speed signal that have been measured; and that report to the radio network controller a request to disconnect the uplink high-speed signal that is set to cells that have been determined as cells to be deleted from the active set; and
a radio network controller that transmits to said mobile terminal a radio line release request for releasing the radio line of the uplink high-speed signal for which a disconnection request that has been reported from said base stations has been received.

26. A CDMA mobile communication system comprising:
mobile terminals that are capable of simultaneously setting radio lines with a plurality of base stations;
base stations: that set radio lines with mobile terminals based on control from a radio network controller; that, when a said mobile terminal performs handover between cells, measure the reception states of an uplink high-speed signal on radio lines that are set with said mobile terminal; that determine cells to be deleted from an active set in accordance with measurement results of the reception states of the uplink high-speed signal that have been measured; and that transmit to the radio network controller data of only a control signal as data of the uplink high-speed signal that is set to cells that have been determined as cells to be deleted from the active set; and
a radio network controller that transmits to said mobile terminals radio line release requests for releasing the radio lines of the uplink high-speed signal that correspond to data of only the control signal that has been received from said base stations.

27. A CDMA mobile communication system comprising:
mobile terminals that are capable of simultaneously setting radio lines with a plurality of base stations;
base stations: that set radio lines with mobile terminals based on control from a radio network controller; that, when a said mobile terminal performs handover between cells, measure the reception states of an uplink high-speed signal on radio lines that are set with said mobile terminal; that determine cells to be deleted from an active set in accordance with the measurement results of reception states of the uplink high-speed signal that have been measured; and that report to the radio network controller an out-of-step state with respect to the uplink high-speed signal that is set to cells that have been determined as cells to be deleted from the active set; and
a radio network controller that transmits to said mobile terminals radio line release requests for releasing radio lines of an uplink high-speed signal for which an out-of-step state has been reported from said base stations.
